# EUROPÄISCHE PATENTSCHRIFT

(11) **EP 2 446 166 B1**
(45) Veröffentlichungstag und Bekanntmachung des Hinweises auf die Patenterteilung: **01.01.2014**
(21) Anmeldenummer: 10722082.4
(22) Anmeldetag: 27.05.2010
(51) Int. Cl.: F16F 1/32

(54) **WELLSCHEIBE UND WELLENLAGERANORDNUNG**
WAVY DISC AND SHAFT BEARING ASSEMBLY
RONDELLE ONDULÉE ET ENSEMBLE DE SUPPORT POUR ARBRE

(30) Priorität: 25.06.2009 DE 102009027188; 14.01.2010 DE 102010000890; 26.05.2010 DE 102010029304
(43) Veröffentlichungstag der Anmeldung: 02.05.2012
(73) Patentinhaber: Robert Bosch GmbH, 70442 Stuttgart (DE)
(72) Erfinder: MALY, Robert, 31139 Hildesheim (DE); KLATTE, Holger, 31141 Hildesheim (DE); KLEMENTIS, Otto, H-9012 Gyor (HU); ZERNIKOW, Maik, 31139 Hildesheim (DE)
(86) Internationale Anmeldenummer: PCT/EP2010/057292
(87) Internationale Veröffentlichungsnummer: WO 2010/149457

(56) Entgegenhaltungen:
- WO-A1-99/64763
- DE-A1- 2 063 661
- FR-A1- 2 865 987

## Beschreibung

### Stand der Technik

Die vorliegende Erfindung betrifft eine Wellscheibe zur Erzeugung einer axialen Vorspannkraft zwischen einer darin aufgenommenen Welle und einem umgebenden Gehäuse und eine Wellenlageranordnung mit einer derartigen Wellscheibe.

Bei der Anordnung von Loslagern werden, insbesondere bei elektrischen Maschinen, wie z. B. Lenkantrieben, diese Loslager über den Außenring gegenüber einem Gehäuse angestellt. Dabei muss die Montage einer Anstell- bzw. Vorspannfeder in Form einer Wellscheibe entweder manuell erfolgen oder dieses Bauteil an einer separaten Montagestation vorher ins Gehäuse montiert werden. Dieser manuelle Arbeitsschritt oder eine erforderliche zusätzliche Montageeinrichtung bei der Produktion solcher Loslager führen jeweils zu einem erhöhten Zeit- und Kostenaufwand.

DE 2063661 A1 offenbart eine Wellscheibe mit den Merkmalen des Oberbegriffes des Anspruches 1 der vorliegenden Erfindung.

### Offenbarung der Erfindung

Die erfindungsgemäße Wellscheibe mit den Merkmalen des Patentanspruchs 1 weist demgegenüber den Vorteil auf, dass sie sich aufgrund ihrer Formgebung auf der Welle selbst zentrieren kann und daher bei der Gehäusemontage ohne aufwändiges manuelles Handling bzw. eine gesonderte Montagestation einfacher und kostengünstiger mitmontiert werden kann. Hierbei ist die erfindungsgemäße Wellscheibe eine aus einer Mittelebene mehrfach nach oben und unten gebogene bzw. gewellte Scheibe, die mindestens drei von ihrem Innenumfang radial nach innen vorragende Zentrierbereiche umfasst, welche eine Selbstzentrierung der darin aufgenommenen Welle ermöglichen, ohne dass die Wellscheibe im eingebauten, verspannten Zustand radial an der Welle oder axial am Lagerinnenring schleift. Dies ermöglicht die Wellscheibe im montierten Zustand durch eine Vergrößerung ihres Innendurchmessers, wenn sie im verspannten Zustand flacher gedrückt wird.

Zentrierpunkte der Zentrierbereiche der Wellscheibe sind in Umfangsrichtung versetzt zu Anlagebereichen einer ersten Stirnfläche und Anlagebereichen einer zweiten Stirnfläche der Wellscheibe angeordnet. Hierdurch erfolgt die Selbstzentrierung der Wellscheibe auf der Welle während der Montage an den Zentrierpunkten nicht in den Bereichen, in denen die Wellfeder durch die Axialkraft im eingebauten Zustand stark elastisch verformt wird.

Die Unteransprüche zeigen bevorzugte Weiterbildungen der Erfindung.

Gemäß einer weiteren bevorzugten Ausgestaltung der Erfindung sind die Zentrierbereiche bogenförmig ausgebildet und weisen jeweils einen Zentrierpunkt auf. Durch diese Formgebung ist die erfindungsgemäße Wellscheibe rationell und kostengünstig herstellbar und weist an ihrem insgesamt abgerundeten Innenumfang keine Kerbwirkungen auf. Alternativ sind die Zentrierbereiche spitz zulaufend ausgebildet oder als radial nach innen vorstehende Stege ausgebildet. Weiter bevorzugt sind genau fünf Zentrierbereiche vorgesehen oder alternativ sind am Innenumfang der Wellscheibe eine Vielzahl von Zähnen als Zentrierbereiche, ähnlich einem innenverzahnten Zahnrad, vorgesehen. Weiter bevorzugt ist die Wellscheibe mit einer dreieckigen Mittenöffnung ausgebildet.

Weiterhin bevorzugt sind alle Zentrierpunkte der Zentrierbereiche auf einer gemeinsamen Ebene der Wellscheibe positioniert, wobei die gemeinsame Ebene senkrecht zu einer Mittelachse der Wellescheibe angeordnet ist. Hierdurch wird eine homogene Ausrichtung und Kraftverteilung durch die Zentrierpunkte bei der Zentrierung der Wellscheibe erzielt. Die gemeinsame Ebene liegt vorzugsweise in der Mitte der Wellscheibe, d.h., mit gleichem Abstand zu den Stirnflächen. Gemäß einer weiteren bevorzugten Ausgestaltung der Erfindung sind an der erfindungsgemäßen Wellscheibe genau drei Zentrierbereiche in einem Winkelabstand von 120° ausgebildet. Hierdurch kann bereits durch diese minimale Anzahl von Zentrierbereichen eine präzise Zentrierung der Welle erzielt werden. Zudem weist die Wellscheibe in dieser Form ein minimales Gewicht auf.

Vorzugsweise beträgt ein Verhältnis eines Innendurchmessers der Wellscheibe zu einem Außendurchmesser der Wellscheibe ca. 1 : 1,4. Hierdurch wird mit minimiertem Materialaufwand neben der erwünschten Zentrierfunktion eine ausreichende Vorspannkraft im Loslager bereitgestellt.

Weiterhin bevorzugt weist die erfindungsgemäße Wellscheibe eine identische Anzahl von in eine erste Achsenrichtung der Welle vorstehende Anlagebereiche und in eine zweite, entgegengesetzte Achsenrichtung der Welle vorstehende Anlagebereiche und Anzahl von Zentrierbereichen auf. Auf diese Weise wird im eingebauten Zustand eine homogene Kraftverteilung bei gleichmäßiger Verformung der beidseitigen Anlagebereiche ermöglicht. Zudem ist die Wellscheibe dadurch in beliebiger Orientierung montierbar.

Gemäß einer weiteren bevorzugten Ausgestaltung der Erfindung weist die Wellscheibe eine symmetrische Anordnung der vorstehenden Anlagebereiche in der ersten Achsenrichtung, der vorstehenden Anlagebereiche in der zweiten Achsenrichtung und der Zentrierbereiche auf. Dadurch ist eine "blinde Montage" ohne visuellen Blickkontakt zum Bauteil möglich. Darüber hinaus ist alternativ auch eine asymmetrische Anordnung der in die beiden Richtungen vorstehenden Anlagebereiche zu den Zentrierbereichen der Wellscheibe möglich, wobei dann jedoch eine orientierte Montage der Wellscheibe mit großem Abstand der Zentrierbereiche zum Lager erfolgen muss.

In vorteilhafter Ausgestaltung ist eine radiale Materialbreite der Wellscheibe über den gesamten Umfang konstant. Die Materialbreite ist zwischen einer Innenseite und einer Außenseite der Wellscheibe in radialer Richtung definiert. Durch die konstante Materialbreite wird die Federwirkung und Belastung über den Umfang konstant gehalten und eine flachere Federkennlinie sowie eine erhöhte Lebensdauer erreicht. In besonders bevorzugter Ausbildung umfasst die Wellscheibe an jedem Zentrierbereich eine bogenförmige, nach außen offene Ausnehmung.

Vorzugsweise ist die Wellscheibe in Umfangsrichtung unterbrochen ausgebildet. Die Unterbrechung der Wellscheibe kann dabei ein unterbrochener Bereich in Form eines radialen Schlitzes sein, wobei der unterbrochene Bereich über einen Umfangswinkel zwischen 5° bis 50°, vorzugsweise zwischen 30° und 40°, verläuft. Hierdurch kann eine verbesserte Anpassungsfähigkeit der Wellscheibe an den Innendurchmesser ermöglicht werden und insbesondere eine einfache Montage erreicht werden. Hierbei ist eine Ausbildung der Wellscheibe als Schnappring oder Sprengring mit Montagehilfsbohrungen zum Angreifen einer Sprengringzange, möglich. Alternativ kann die Wellscheibe derart unterbrochen sein, dass Endbereiche der Wellscheibe sich am unterbrochenen Bereich überlappen. Hierdurch wird eine gewellte, ringförmige, sich überlappende Wellscheibe bereitgestellt. Der überlappende Bereich ist dabei über einen Umfangswinkelbereich, vorzugsweise zwischen 10° und 30°, gebildet. Weiterhin ist eine Wellenlageranordnung offenbart, die eine Welle, ein Lager, das auf der Welle axial fixiert und in einem umgebenden Gehäuse axial verschiebbar angeordnet ist, und eine Wellscheibe umfasst, die zwischen dem Gehäuse und dem Lager angeordnet ist. Im nicht montierten Zustand weist die Wellscheibe zwischen dem Innendurchmesser der Wellscheibe und einem Außendurchmesser der Welle ein kleineres Differenzmaß, als ein Differenzmaß zwischen einem Innendurchmesser des Gehäuses und einem Außendurchmesser der Wellscheibe auf. Während der Montage der Wellenlageranordnung im Gehäuse zentriert sich die Scheibe auf der Welle ohne vom Gehäuse abgeschert zu werden. Beim Anstellen des Lagers wird die Wellscheibe axial zusammengedrückt und verändert sowohl ihren Innen- als auch ihren Außendurchmesser. Im montierten Zustand, d.h., wenn die Wellscheibe zusammengedrückt ist, weist die Wellscheibe demzufolge zwischen ihrem Innendurchmesser und dem Außendurchmesser der Welle ein größeres Differenzmaß als das Differenzmaß zwischen dem Innendurchmesser des Gehäuses und dem Außendurchmesser der Wellscheibe auf. Somit wird durch Aufbringen einer Axialkraft auf die Wellscheibe durch Aufschieben des Gehäuses zwangsweise eine Verformung mit einer Änderung des Innen- und Außendurchmessers der Wellscheibe erreicht werden. Durch die im montierten Zustand erreichte Selbstzentrierung der Wellscheibe am Gehäuse ohne eine Berührung der Welle wird eine einfachere Montage der Wellscheibe zusammen mit der Welle beim Einfügen in das Gehäuse ohne einen zusätzlichen Arbeitsschritt oder eine separate Montageeinrichtung ermöglicht. Insbesondere kann zuerst die Wellscheibe auf der Welle montiert werden und dann das Gehäuse aufgeschoben werden.

### Kurze Beschreibung der Zeichnungen

Nachfolgend werden zwei Ausführungsbeispiele der Erfindung unter Bezugnahme auf die begleitende Zeichnung im Detail beschrieben. In der Zeichnung ist:
- Figur 1: eine Draufsicht der erfindungsgemäßen Wellscheibe gemäß einem ersten Ausführungsbeispiel,
- Figur 2: eine perspektivische Darstellung der erfindungsgemäßen Wellscheibe gemäß dem ersten Ausführungsbeispiel,
- Figur 3: eine Seitenansicht der erfindungsgemäßen Wellscheibe gemäß dem ersten Ausführungsbeispiel,
- Figur 4: eine Schnittdarstellung einer Wellenlageranordnung mit der erfindungsgemäßen Wellscheibe gemäß dem ersten Ausführungsbeispiel,
- Figur 5: eine Draufsicht der erfindungsgemäßen Wellscheibe gemäß einem zweiten Ausführungsbeispiel, und
- Figur 6: eine Seitenansicht der erfindungsgemäßen Wellscheibe gemäß dem zweiten Ausführungsbeispiel.

### Ausführungsform der Erfindung

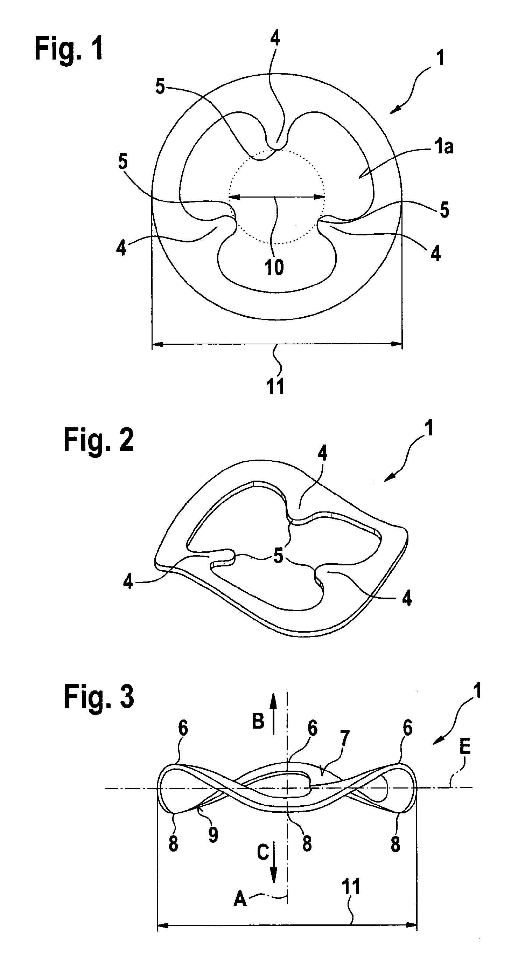

Nachfolgend wird unter Bezugnahme auf die Figuren 1 bis 4 eine erfindungsgemäße Wellscheibe gemäß einem ersten Ausführungsbeispiel und eine Wellenlageranordnung beschrieben, die die erfindungsgemäße Wellscheibe umfasst.

Wie aus der vergrößerten Draufsicht von Figur 1 ersichtlich, ist die erfindungsgemäße, vorzugsweise aus Federstahl hergestellte Wellscheibe 1 ringförmig mit einem Außendurchmesser 11 ausgebildet und weist an einem Innenumfang 1a drei radial nach innen vorragende Zentrierbereiche 4 auf, welche in einem Winkelabstand von 120° angeordnet sind. Der Durchmesser des Innenumfangs 1a der Wellscheibe 1 verringert sich in Richtung zu den Zentrierbereichen 4 im Wesentlichen gleichmäßig, sodass sich eine angeschmiegte Form der Zentrierbereiche 4 an den Verlauf des dazwischen liegenden Bereichs des Innenumfangs 1a ergibt. Jeder Zentrierbereich 4 weist an seinem vorderen Ende einen Zentrierpunkt 5 auf. Die Zentrierpunkte 5 definieren einen punktiert angedeuteten Innenbereich (zur Aufnahme einer Welle 2) mit einem minimalen Innendurchmesser 10 der Wellscheibe 1. Bei alternativen Ausführungsformen ist auch eine größere Anzahl von am Innenumfang 1a ausgebildeten Zentrierbereichen 4 möglich, die gleichmäßig in jeweils der Anzahl entsprechenden Winkelabständen angeordnet sind.

Figur 2 zeigt eine vergrößerte perspektivische Darstellung der Wellscheibe 1 von Figur 1 in einem nicht verformten Zustand. Wie aus der perspektivischen Darstellung von Figur 2 ersichtlich, ist die ringförmige Wellscheibe 1 in diesem Ausführungsbeispiel dreifach nach oben und nach unten gebogen bzw. gewellt, wobei die drei Zentrierpunkte 5 der Zentrierbereiche 4 auf einer gemeinsamen, hier nicht dargestellten Ebene E liegen. Diese Ebene E ist in der Seitenansicht der Wellscheibe 1 von Figur 3 ersichtlich, in der die gemeinsame Ebene E durch eine strichpunktierte Linie angedeutet ist, die senkrecht zu einer strichpunktiert gezeichneten Mittelachse A der Wellscheibe 1 angeordnet ist. Besonders vorteilhaft ist die symmetrische Anordnung der Zentrierbereiche 4 in Bezug auf Stirnflächen 7 und 9 bzw. auf Anlagebereiche 6 und 8 der Wellscheibe 1, die ebenfalls in Figur 3 veranschaulicht sind. Hierdurch ist eine Montage ohne Beachtung der Ausrichtung bzw. Orientierung der Wellscheibe möglich

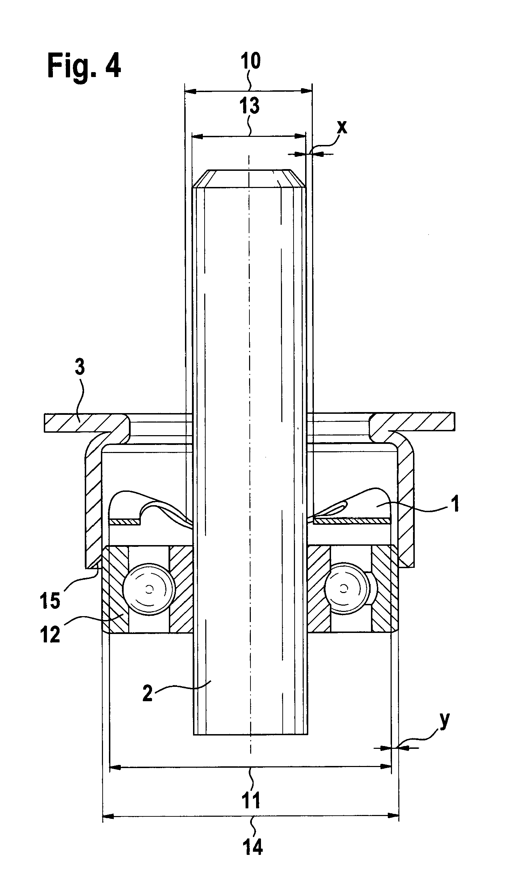

Wie aus Figur 3 ferner ersichtlich, umfasst eine erste Stirnfläche 7 der erfindungsgemäßen Wellscheibe 1 drei aus der gemeinsamen Ebene E in eine erste Achsenrichtung B einer (hier nicht dargestellten) Welle 2 vorstehende Anlagebereiche 6. Ferner umfasst eine zweite Stirnfläche 9 der Wellscheibe 1 drei aus der gemeinsamen Ebene E in eine entgegengesetzte zweite Achsenrichtung C der Welle 2 vorstehende Anlagebereiche 8. Hierbei liegen die Zentrierbereiche 4 der Wellscheibe 1 in Umfangsrichtung nicht an den Anlagebereichen 6, 8 der Wellscheibe. Bei der Montage der Wellscheibe 1 werden die nach oben und unten vorstehenden Anlagebereiche 6 und 8 durch eine axiale Kraft zusammengedrückt. Die Wellscheibe 1 nimmt somit eine flachere Form an und vergrößert daher ihre Innen- und Außendurchmesser 10, 11. Somit wird erreicht, dass im nicht verspannten Zustand die Zentrierung der Welle 2 über die auf der Ebene E angeordneten Zentrierbereiche 4 erfolgt, während im endmontierten Zustand eine Vorspannkraft gegenüber einem (in Figur 4 dargestellten) Gehäuse 3 durch die elastische Verformung der in die beiden Achsenrichtungen B, C vorstehenden Anlagebereiche 6, 8 aufgebracht wird. Alternativ kann bei der erfindungsgemäßen Wellscheibe 1 auch eine größere Anzahl von aus der ersten Stirnfläche 7 vorstehenden Bereichen 6 und aus der zweiten Stirnfläche 9 vorstehenden Bereichen 8 ausgebildet sein.

In Figur 4 ist eine vergrößerte Schnittdarstellung einer Wellenlageranordnung veranschaulicht, die die erfindungsgemäße Wellscheibe 1 umfasst. Wie aus Figur 4 ersichtlich, ist auf der Welle 2 eine Wellscheibe 1 sowie ein auf der Welle 2 fixiertes Lager 12 in einem Gehäuse 3 angeordnet, wobei hier ein Montagezustand mit auseinandergezogenen Bauteilen und noch nicht der vorgespannte zusammengebaute Endzustand der Wellenlageranordnung gezeigt ist. Wie aus Figur 4 weiter ersichtlich, ist der Innendurchmesser 10 der Wellscheibe 1 größer als ein Außendurchmesser 13 der Welle 2 ausgebildet. Die dadurch vorhandene Maßdifferenz zwischen dem Innendurchmesser 10 der Wellscheibe und dem Außendurchmesser 13 der Welle 2 ist durch ein Differenzmaß x in der Figur 4 angedeutet. Darüber hinaus ist ein Innendurchmesser 14 des Gehäuses 3 größer als der Außendurchmesser 11 der Wellscheibe 1 ausgebildet. Die dadurch vorhandene Maßdifferenz zwischen dem Innendurchmesser 14 des Gehäuses 3 und dem Außendurchmesser 11 der Wellscheibe 1 ist durch ein Differenzmaß y in der Figur 4 angedeutet.

Am Gehäuse 3 ist ferner am Innendurchmesser 14 eine Fase 15 gebildet, welche eine vereinfachte Montage des Gehäuses ermöglicht, da dieses über der schon auf der Welle montierten Wellscheibe an der Fase 13 zentriert werden kann. Das Differenzmaß x zwischen dem Innendurchmesser 10 der Wellscheibe 1 und der darin aufgenommenen Welle 2 ist im teilmontierten Zustand (wie in Figur 4 gezeigt) kleiner als das Differenzmaß y zwischen dem Außendurchmesser 11 der Wellscheibe 1 und dem umgebenden Gehäuse 3. Durch die Vorspannung des Lagers 12 und der Welle 2 gegenüber dem Gehäuse 3 wird die Wellscheibe 1 bei der Gehäusemontage flacher gedrückt und das Differenzmaß x zwischen Wellscheibe 1 und Welle 2 vergrößert sich, während sich das Differenzmaß y zwischen Wellscheibe 1 und Gehäuse 3 verringert. Die Wellscheibe 1 zentriert sich auf diese Weise im Gehäuse 3 und weist einen ausreichenden Abstand zur Welle 2 auf, sodass eine Berührung zwischen Wellscheibe 1 und Welle 2 ausgeschlossen ist.

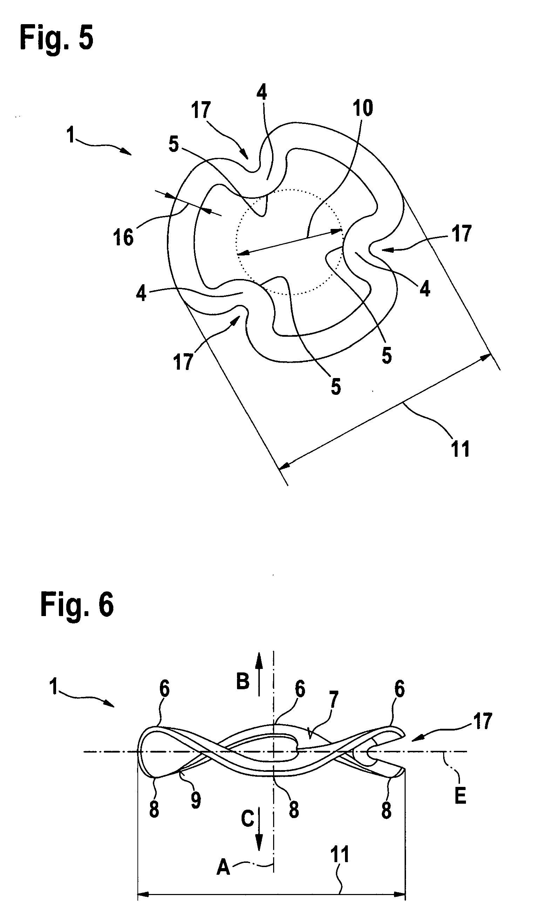

Anhand der Fig. 5 und 6 wird ein zweites Ausführungsbeispiel der Wellscheibe 1 beschrieben. Gleiche bzw. funktional gleiche Bauteile sind in beiden Ausführungsbeispielen mit denselben Bezugszeichen versehen.

Die Wellscheibe 1 gemäß dem zweiten Ausführungsbeispiel weist eine konstante Materialbreite 16 über ihren gesamten Umfang auf. Die Materialbreite 16 ist zwischen einer Innenseite und einer Außenseite der Wellscheibe in radialer Richtung definiert. Durch die konstante Materialbreite wird die Federwirkung und Belastung über den Umfang konstant gehalten. Ferner ermöglicht die konstante Materialbreite 16 eine flachere Federkennlinie sowie eine erhöhte Lebensdauer der Wellscheibe 1. Zur konstruktiven Ausgestaltung der konstanten Materialbreite 16 umfasst die Wellscheibe 1 an jedem Zentrierbereich 4 eine bogenförmige, nach außen offene Ausnehmung 17. Durch die Einbuchtungen 17 am Rand der Welscheibe wird ein größerer effektiver Umfang als bei runden Wellscheiben erreicht (länge Umfangslinie). Dadurch erhält die Wellscheibe eine flachere Federkennlinie und kann Toleranzen besser ausgleichen. Bisher wurde bei einer zu steilen Federkennlinie einlagiger Wellscheiben auf mehrlagig gewickelte Federn umgestellt welche ein vielfaches kosten. Die durch die Einbuchtungen erreichte Abflachung der Federkennlinie erhöht den Einsatzbereich preiswerter einlagiger Wellscheiben.

Wie Fig. 6 zeigt sind die Anlagebereiche 6, 8 genauso wie im ersten Ausführungsbeispiel ausgebildet. Die Wellscheibe 1 nach dem zweiten Ausführungsbeispiel kann selbstverständlich auch in der Wellenlageranordnung gemäß Fig. 4 angewendet werden,

Es sei angemerkt, dass bei den vorhergehend beschriebenen Ausführungsbeispielen auch eine Wellscheibe verwendet werden kann, welche in Richtung ihres Umfangs unterbrochen ist. Die Unterbrechung kann dabei als radialer Schlitz in der Wellscheibe vorgesehen sein, oder die Unterbrechung ist in Form von überlappenden Endbereichen der Wellscheibe vorgesehen.

## Patentansprüche

1. Wellscheibe mit mindestens drei von ihrem Innenumfang (1a) radial nach innen vorragenden Zentrierbereichen (4), **dadurch gekennzeichnet, dass**
- die Wellscheibe (1) eingerichtet ist, eine axiale Vorspannkraft zwischen einer darin aufgenommenen Welle (2) und einem umgebenden Gehäuse (3) zu erzeugen,
- wobei Zentrierpunkte (5) der Zentrierbereiche (4) an der Welle (2) in Umfangsrichtung versetzt zu Anlagebereichen (6) einer ersten Stirnfläche (7) und Anlagebereichen (8) einer zweiten Stirnfläche (9) der Wellscheibe (1) angeordnet sind.

2. Wellscheibe nach Anspruch 1, **dadurch gekennzeichnet, dass** die Zentrierbereiche (4) bogenförmig ausgebildet sind und jeweils genau einen Zentrierpunkt (5) aufweisen.

3. Wellscheibe nach Anspruch 2, **dadurch gekennzeichnet, dass** alle Zentrierpunkte (5) der Zentrierbereiche (4) auf einer gemeinsamen Ebene (E) der Wellscheibe (1) angeordnet sind, wobei die gemeinsame Ebene (E) senkrecht zu einer Mittelachse (A) der Wellscheibe (1) angeordnet ist.

4. Wellscheibe nach einem der vorhergehenden Ansprüche, **dadurch gekennzeichnet, dass** genau drei Zentrierbereiche (4) in einem Winkelabstand von 120° ausgebildet sind.

5. Wellscheibe nach einem der vorhergehenden Ansprüche, **dadurch gekennzeichnet, dass** ein Verhältnis eines Innendurchmessers (10) der Wellscheibe (1) zu einem Außendurchmesser (11) der Wellscheibe 1 ca. 1 : 1,4 beträgt.

6. Wellscheibe nach einem der vorhergehenden Ansprüche, **dadurch gekennzeichnet, dass** eine Anzahl von in eine erste Achsenrichtung (B) der Welle (2) vorstehenden Anlagebereichen (6) und eine Anzahl von in eine zweite, entgegengesetzte Achsenrichtung (C) der Welle (2) vorstehenden Anlagebereichen (8) und eine Anzahl von Zentrierbereichen (4) gleich ist.

7. Wellscheibe nach Anspruch 6, **gekennzeichnet durch** eine symmetrische Anordnung der vorstehenden Anlagebereiche (6) in der ersten Achsenrichtung (B), der vorstehenden Anlagebereiche (8) in der zweiten Achsenrichtung (C) und der Zentrierbereiche (4).

8. Wellscheibe nach einem der vorhergehenden Ansprüche, **dadurch gekennzeichnet, dass** eine radiale Materialbreite (16) der Wellscheibe (1) über den gesamten Umfang konstant ist.

9. Wellscheibe nach Anspruch 8, **dadurch gekennzeichnet, dass** die Wellscheibe (1) an jedem Zentrierbereich (4) eine bogenförmige, nach außen offene Ausnehmung (17) umfasst.

10. Wellscheibe nach einem der vorhergehenden Ansprüche, **dadurch gekennzeichnet, dass** die Wellscheibe in Umfangsrichtung einen unterbrochenen Bereich aufweist.

11. Wellscheibe nach Anspruch 10, **dadurch gekennzeichnet, dass** der unterbrochene Bereich ein radialer Schlitz mit einer vorbestimmten Umfangsbreite ist.

12. Wellscheibe nach Anspruch 10, **dadurch gekennzeichnet, dass** sich Endbereiche der unterbrochenen Wellscheibe überlappen.

13. Wellenlageranordnung, umfassend
- eine Welle (2),
- ein Lager (12), das auf der Welle (2) axial fixiert und in einem umgebenden Gehäuse (3) axial verschiebbar angeordnet ist, und
- eine an der Welle angeordnete Wellscheibe (1),
- wobei im vormontierten Zustand eine Differenz (y) zwischen einem Innendurchmesser (14) des Gehäuses und einem Außendurchmesser (11) der Wellscheibe größer ist als eine Differenz (x) zwischen einem Innendurchmesser (10) der Wellscheibe und einem Außendurchmesser (13) der Welle, und
- wobei im endmontierten Zustand eine Differenz (y) zwischen einem Innendurchmesser (14) des Gehäuses und einem Außendurchmesser (11) der Wellscheibe kleiner ist als eine Differenz (x) zwischen einem Innendurchmesser (10) der Wellscheibe und einem Außendurchmesser (13) der Welle.

14. Wellenlageranordnung nach Anspruch 13, **dadurch gekennzeichnet, dass** das Gehäuse (3) eine nach innen gerichtete Fase (15) am Innendurchmesser (14) aufweist.

15. Wellenlageranordnung nach Anspruch 13 oder 14, umfassend eine Wellscheibe nach einem der Ansprüche 1 bis 12.

## Claims

1. Wavy disc with at least three centring regions (4) projecting radially inwards from its inner circumference (1a), **characterized in that**
- the wavy disc (1) is designed to generate an axial prestressing force between a shaft (2) received therein and a surrounding housing (3),
- centring points (5) of the centring regions (4) on the shaft (2) being arranged so as to be offset in the circumferential direction in relation to bearing regions (6) of a first end face (7) and bearing regions (8) of a second end face (9) of the wavy disc (1).

2. Wavy disc according to Claim 1, **characterized in that** the centring regions (4) are of arcuate form and have in each case exactly one centring point (5).

3. Wavy disc according to Claim 2, **characterized in that** all the centring points (5) of the centring regions (4) are arranged on a common plane (E) of the wavy disc (1), the common plane (E) being arranged perpendicularly to a mid-axis (A) of the wavy disc (1).

4. Wavy disc according to one of the preceding claims, **characterized in that** exactly three centring regions (4) are arranged at an angular interval of 120°.

5. Wavy disc according to one of the preceding claims, **characterized in that** a ratio of an inside diameter (10) of the wavy disc (1) to an outside diameter (11) of the wavy disc (1) amounts to approximately 1:1.4.

6. Wavy disc according to one of the preceding claims, **characterized in that** a number of bearing regions (6) projecting in a first axial direction (B) of the shaft (2) and a number of bearing regions (8) projecting in a second, opposite axial direction (C) of the shaft (2) and a number of centring regions (4) are identical.

7. Wavy disc according to Claim 6, **characterized by** a symmetrical arrangement of the projecting bearing regions (6) in the first axial direction (B), of the projecting bearing regions (8) in the second axial direction (C) and of the centring regions (4).

8. Wavy disc according to one of the preceding claims, **characterized in that** a radial material width (16) of the wavy disc (1) is constant over the entire circumference.

9. Wavy disc according to Claim 8, **characterized in that** the wavy disc (1) comprises on each centring region (4) an arcuate recess (17) open outwards.

10. Wavy disc according to one of the preceding claims, **characterized in that** the wavy disc has an interrupted region in the circumferential direction.

11. Wavy disc according to Claim 10, **characterized in that** the interrupted region is a radial slot with a predetermined circumferential width.

12. Wavy disc according to Claim 10, **characterized in that** end regions of the interrupted wavy disc overlap one another.

13. Shaft bearing assembly, comprising
- a shaft (2),
- a bearing (12) which is fixed axially on the shaft (2) and is arranged axially displaceably in a surrounding housing (3), and
- a wavy disc (1) arranged on the shaft,
- in the preassembled state a difference (y) between an inside diameter (14) of the housing and an outside diameter (11) of the wavy disc being greater than a difference (x) between an inside diameter (10) of the wavy disc and an outside diameter (13) of the shaft, and
- in the final assembled state a difference (y) between an inside diameter (14) of the housing and an outside diameter (11) of the wavy disc being smaller than a difference (x) between an inside diameter (10) of the wavy disc and an outside diameter (13) of the shaft.

14. Shaft bearing assembly according to Claim 13, **characterized in that** the housing (3) has an inwardly directed chamfer (15) on the inside diameter (14).

15. Shaft bearing assembly according to Claim 13 or 14, comprising a wavy disc according to one of Claims 1 to 12.

## Revendications

1. Rondelle ondulée comprenant au moins trois zones de centrage (4) faisant saillie radialement vers l'intérieur depuis sa périphérie interne (1a), **caractérisée en ce que**
- la rondelle ondulée (1) est prévue pour produire une force de précontrainte axiale entre un arbre (2) reçu dans celle-ci et un boîtier qui l'entoure (3),
- des points de centrage (5) des zones de centrage (4) étant disposés sur l'arbre (2) de manière décalée dans la direction périphérique par rapport à des zones d'appui (6) d'une première face frontale (7) et des zones d'appui (8) d'une deuxième face frontale (9) de la rondelle ondulée (1).

2. Rondelle ondulée selon la revendication 1, **caractérisée en ce que** les zones de centrage (4) sont réalisées en forme d'arc et présentent à chaque fois exactement un point de centrage (5).

3. Rondelle ondulée selon la revendication 2, **caractérisée en ce que** tous les points de centrage (5) des zones de centrage (4) sont disposés sur un plan commun (E) de la rondelle ondulée (1), le plan commun (E) étant disposé perpendiculairement à un axe médian (A) de la rondelle ondulée (1).

4. Rondelle ondulée selon l'une quelconque des revendications précédentes, **caractérisée en ce qu'**exactement trois zones de centrage (4) sont réalisées avec un intervalle angulaire de 120°.

5. Rondelle ondulée selon l'une quelconque des revendications précédentes, **caractérisée en ce qu'**un rapport d'un diamètre intérieur (10) de la rondelle ondulée (1) à un diamètre extérieur (11) de la rondelle ondulée (1) vaut environ 1 : 1,4.

6. Rondelle ondulée selon l'une quelconque des revendications précédentes, **caractérisée en ce qu'**une pluralité de zones d'appui (6) saillantes dans une première direction axiale (B) de l'arbre (2) et une pluralité de zones d'appui (8) saillantes dans une deuxième direction axiale opposée (C) de l'arbre (2) et une pluralité de zones de centrage (4) sont identiques.

7. Rondelle ondulée selon la revendication 6, **caractérisée par** un agencement symétrique des zones d'appui saillantes (6) dans la première direction axiale (B), des zones d'appui saillantes (8) dans la deuxième direction axiale (C) et des zones de centrage (4).

8. Rondelle ondulée selon l'une quelconque des revendications précédentes, **caractérisée en ce qu'**une largeur de matériau radiale (16) de la rondelle ondulée (1) est constante sur toute la périphérie.

9. Rondelle ondulée selon la revendication 8, **caractérisée en ce que** la rondelle ondulée (1) comprend, au niveau de chaque zone de centrage (4), un évidement (17) en forme d'arc, ouvert vers l'extérieur.

10. Rondelle ondulée selon l'une quelconque des revendications précédentes, **caractérisée en ce que** la rondelle ondulée présente, dans la direction périphérique, une zone interrompue.

11. Rondelle ondulée selon la revendication 10, **caractérisée en ce que** la région interrompue est une fente radiale ayant une largeur périphérique prédéfinie.

12. Rondelle ondulée selon la revendication 10, **caractérisée en ce que** des zones d'extrémité de la rondelle ondulée interrompue se chevauchent.

13. Agencement de palier d'arbre comprenant :
- un arbre (2),
- un palier (12) qui est fixé axialement sur l'arbre (2) et qui est disposé de manière déplaçable axialement dans un boîtier (3) qui l'entoure, et
- une rondelle ondulée (1) disposée sur l'arbre,
- une différence (y) entre un diamètre intérieur (14) du boîtier et un diamètre extérieur (11) de la rondelle ondulée étant, dans l'état prémonté, supérieure à une différence (x) entre un diamètre intérieur (10) de la rondelle ondulée et un diamètre extérieur (13) de l'arbre, et
- une différence (y) entre un diamètre intérieur (14) du boîtier et un diamètre extérieur (11) de la rondelle ondulée étant, dans l'état de montage final, inférieure à une différence (x) entre un diamètre intérieur (10) de la rondelle ondulée et un diamètre extérieur (13) de l'arbre.

14. Agencement de palier d'arbre selon la revendication 13, **caractérisé en ce que** le boîtier (3) présente un biseau (15) orienté vers l'intérieur sur le diamètre intérieur (14).

15. Agencement de palier d'arbre selon la revendication 13 ou 14, comprenant une rondelle ondulée selon l'une quelconque des revendications 1 à 12.
